# EUROPÄISCHE PATENTANMELDUNG

(11) **EP 3 415 048 A1**
(43) Veröffentlichungstag der Anmeldung: **19.12.2018**
(21) Anmeldenummer: 18176893.8
(22) Anmeldetag: 11.06.2018
(51) Int. Cl.: A47J 31/00, A47J 31/18, A47J 31/40

(54) **TEEAUTOMAT MIT SENSOREINRICHTUNG ZUR ZUTATENPORTIONSERFASSUNG UND VERFAHREN ZUR STEUERUNG EINES TEEAUTOMATEN**

(30) Priorität: 12.06.2017 DE 102017112900
(71) Anmelder: Vorwerk & Co. Interholding GmbH, 42275 Wuppertal (DE)
(72) Erfinder: HAHN, Pia, 58332 Schwelm (DE); BAPAT, Aniket, 40882 Ratingen (DE); TAMM, Steffen, 40219 Düsseldorf (DE); GROOM, Sascha, 48607 Ochtrup (DE); ZILS, Jürgen, 51399 Burscheid (DE)
(74) Vertreter: Cohausz & Florack

(57) **Zusammenfassung**

Die Erfindung betrifft einen Teeautomaten (2), eingerichtet zur automatischen Zubereitung von Teegetränken in einer Brühkammer (4), wobei der Teeautomat (2) eine Sensoreinrichtung (40) aufweist, die dazu eingerichtet ist, eine in den Teeautomaten (2) eingefüllte Zutatenportion (24), insbesondere eine Portion Teeblätter, zu erfassen und einen Wert für eine Eigenschaft der Zutatenportion (24) zu bestimmen, und wobei der Teeautomat (2) eine Steuereinrichtung (10) zur Steuerung des Teeautomaten (2) aufweist, die dazu eingerichtet ist, den Teeautomaten (2) abhängig von dem Wert für die Eigenschaft der Zutatenportion (24) zu steuern. Die Erfindung betrifft weiterhin ein Verfahren zur Steuerung eines Teeautomaten (2), bei dem eine in den Teeautomaten (2) eingefüllte Zutatenportion (24), insbesondere eine Portion Teeblätter, optisch erfasst wird und ein Wert für eine Eigenschaft der Zutatenportion (24), insbesondere für deren Farbe, Körnung, Schüttdichte und/oder Volumen, bestimmt wird, und bei dem ein Brühvorgang mit der Zutatenportion (24) abhängig von dem bestimmten Wert für die Eigenschaft der Zutatenportion (24) gesteuert wird.

## Beschreibung

Die Erfindung betrifft einen Teeautomaten, eingerichtet zur automatischen Zubereitung von Teegetränken in einer Brühkammer. Weiterhin betrifft die Erfindung ein Verfahren zur Steuerung eines Teeautomaten.

Während Kaffeeautomaten zur automatischen Zubereitung von Kaffeegetränken seit langem bekannt sind, sind erst in jüngerer Zeit Teeautomaten entwickelt worden, die speziell zur automatischen Zubereitung von Teegetränken vorgesehen sind.

Bei der Zubereitung von Teegetränken in einer Brühkammer werden die Teeblätter in der Brühkammer mit heißem Wasser in Kontakt gebracht und dort für eine vorgegebene Brühzeit belassen, so dass Farb- und Aromastoffe aus den Teeblättern in das Wasser gelangen können, das dadurch zum fertigen Teegetränk wird. Um ein optimales Brühergebnis zu erhalten, sind geeignete Brühparameter für den Brühvorgang zu verwenden, insbesondere die richtige Brühzeit und die richtige Brühtemperatur. Diese können je nach Teesorte und je nach den Wünschen des Nutzers stark variieren.

Bei Teemaschinen aus dem Stand der Technik ist es erforderlich, dass der Nutzer die einzelnen Brühparameter selbst einstellt. Dies ist einerseits wenig nutzerfreundlich und andererseits kann die Teezubereitung misslingen, wenn der Nutzer die Brühparameter falsch einstellt.

Vor diesem Hintergrund liegt der vorliegenden Erfindung die Aufgabe zugrunde, einen Teeautomaten und ein Verfahren zur Steuerung eines Teeautomaten zur Verfügung zu stellen, die einen verbesserten Bedienkomfort bieten und mit denen zuverlässig ein gutes Ergebnis des Brühvorgangs erreicht werden kann.

Diese Aufgabe wird bei einem Teeautomaten, eingerichtet zur automatischen Zubereitung von Teegetränken in einer Brühkammer, erfindungsgemäß dadurch gelöst, dass der Teeautomat eine Sensoreinrichtung aufweist, die dazu eingerichtet ist, eine in den Teeautomaten eingefüllte Zutatenportion zu erfassen und einen Wert für eine Eigenschaft der Zutatenportion zu bestimmen, und dass der Teeautomat eine Steuereinrichtung zur Steuerung des Teeautomaten aufweist, die dazu eingerichtet ist, den Teeautomaten abhängig von dem Wert für die Eigenschaft der Zutatenportion zu steuern. Bei der Zutatenportion kann es sich insbesondere um eine Portion Teeblätter handeln.

Weiterhin wird die oben genannte Aufgabe erfindungsgemäß gelöst durch ein Verfahren zur Steuerung eines Teeautomaten, insbesondere des zuvor beschriebenen Teeautomaten, bei dem eine in den Teeautomaten eingefüllte Zutatenportion optisch erfasst wird und ein Wert für eine Eigenschaft der Zutatenportion, insbesondere für deren Farbe, Körnung, Schüttdichte und/oder Volumen, bestimmt wird, und bei dem ein Brühvorgang mit der Zutatenportion abhängig von dem bestimmten Wert für die Eigenschaft der Zutatenportion gesteuert wird.

Auf diese Weise kann eine vom Nutzer in den Teeautomaten gefüllte Zutatenportion, insbesondere eine Portion Teeblätter, vom Teeautomaten automatisch erkannt werden, so dass der Teeautomat geeignete Brühparameter für die Zutatenportion auswählen oder eine Warnung ausgeben kann, wenn ungeeignete Brühparameter eingestellt sind.

Der Teeautomat ist zur automatischen Zubereitung von Teegetränken in einer Brühkammer eingerichtet. Zu diesem Zweck weist der Teeautomat eine Brühkammer auf sowie eine Steuereinrichtung, die die automatische Zubereitung eines Teegetränkes in der Brühkammer steuert. Darüber hinaus weist der Teeautomat noch weitere Komponenten auf, die für die automatische Zubereitung von Teegetränken erforderlich sind. Insbesondere kann der Teeautomat eine oder mehrere der folgenden Komponenten aufweisen: eine Heißwasserversorgung, eine Einfüllöffnung für eine Zutatenportion, einen Siebeinsatz und eine Verfahreinrichtung zum Bewegen des Siebeinsatzes in der Brühkammer, eine Ausgabeeinrichtung zur Ausgabe des fertigen Teegetränks aus der Brühkammer.

Der Teeautomat weist eine Sensoreinrichtung auf. Die Sensoreinrichtung umfasst mindestens einen Sensor. Bei dem Sensor handelt es sich vorzugsweise um einen optischen Sensor, beispielsweise um eine Kamera. Vorzugsweise weist die Sensoreinrichtung mindestens zwei Kameras auf, welche Kameras zweckmäßigerweise Bilddaten zur dreidimensionalen Erfassung der eingesetzten bzw. eingefüllten Zutatenportion bereitstellen. Die Sensoreinrichtung ist dazu eingerichtet, eine in den Teeautomaten eingefüllte Zutatenportion zu erfassen. Zu diesem Zweck ist der mindestens eine Sensor der Sensoreinrichtung derart positioniert, dass er ein Signal, beispielsweise ein Bild, von einer in den Teeautomaten eingefüllten Zutatenportion erfassen kann. Beispielsweise kann der Sensor im Bereich einer Aufnahme für die Zutatenportion bzw. eines Siebeinsatzes angeordnet sein.

Die Sensoreinrichtung ist weiterhin dazu eingerichtet, einen Wert für eine Eigenschaft der Zutatenportion zu bestimmen. Einen solchen Wert bestimmt die Sensoreinrichtung aus den Daten, die sie mittels des mindestens einen Sensors erfasst hat, beispielsweise aus Bilddaten von der Zutatenportion. Bei dem Wert für eine Eigenschaft der Zutatenportion kann es sich beispielsweise um einen Zahlenwert handeln, der eine Eigenschaft der Zutatenportion repräsentiert, beispielsweise das Volumen der Zutatenportion und/oder die Farbe, Form und/oder Größe von Bestandteilen der Zutatenportion, insbesondere von Teeblättern. Gemäß einer vorteilhaften Ausführungsform wird durch die Sensoreinrichtung das Volumen, bevorzugt eine Schüttdichte und/oder aus dem Volumen und der Schüttdichte die Masse der Zutatenportion bestimmt.

Die Steuereinrichtung ist dazu eingerichtet, den Teeautomaten abhängig von dem Wert für die Eigenschaft der Zutatenportion zu steuern. Beispielsweise kann die Steuereinrichtung abhängig von dem bestimmten Wert die Brühparameter für einen folgenden Brühvorgang auswählen oder die Ausgabe einer Nutzerinformation über eine Nutzerschnittstelle des Teeautomaten bewirken.

Im Folgenden werden verschiedene Ausführungsformen des Teeautomaten und des Verfahrens beschrieben, wobei die einzelnen Ausführungsformen jeweils sowohl für den Teeautomaten als auch für das Verfahren gelten und weiterhin beliebig untereinander kombiniert werden können.

Bei einer ersten Ausführungsform weist die Sensoreinrichtung zur Erfassung der Zutatenportion einen optischen Sensor, insbesondere eine Kamera zur Aufnahme von Bilddaten auf. Mit einem optischen Sensor kann die Zutatenportion berührungslos erfasst werden. Es wurde insbesondere festgestellt, dass sich charakteristische Eigenschaften einer Zutatenportion, insbesondere von Teeblättern, einfach durch die Analyse von Bilddaten bestimmen lassen, die von einer Kamera aufgenommen wurden. So lassen sich aus den Bilddaten beispielsweise die Farbe von Teeblättern, deren Größe und Formen ableiten, aber auch die Schüttdichte und das von der Zutatenportion eingenommene Volumen bestimmen. Zu diesem Zweck können die Bilddaten mittels bildverarbeitungstechnischer Methoden analysiert werden. In einer bevorzugten Ausführungsform umfasst die Sensoreinrichtung eine 3D-Kamera, um die Zutatenportion bzw. deren Bestandteile dreidimensional erfassen zu können. Auf diese Weise kann zum Beispiel zuverlässiger das von der Zutatenportion eingenommene Volumen bestimmt werden.

Bei einer weiteren Ausführungsform ist die Sensoreinrichtung dazu eingerichtet, einen Wert für die Farbe, die Körnung, die Schüttdichte und/oder das Volumen der in den Teeautomaten eingefüllten Zutatenportion zu bestimmen. Insbesondere kann die Sensoreinrichtung dazu eingerichtet sein, einen Wert für die Menge der in den Teeautomaten befindlichen Zutatenportion zu bestimmen, beispielsweise anhand des von der von der Zutatenportion eingenommenen Volumens und der ermittelten Schüttdichte. Beispielsweise kann die Wassermenge für einen nachfolgenden Brühvorgang abhängig von der ermittelten Menge der Zutatenportion bestimmt werden.

Bei einer weiteren Ausführungsform ist die Sensoreinrichtung dazu eingerichtet, eine sich in der Brühkammer oder in einem in die Brühkammer eingesetzten Siebeinsatz befindliche Zutatenportion zu erfassen. Zu diesem Zweck ist ein Sensor der Sensoreinrichtung vorzugsweise oberhalb der Brühkammer bzw. oberhalb eines in die Brühkammer eingesetzten Siebeinsatzes angeordnet.

Bei einer weiteren Ausführungsform ist die Steuereinrichtung dazu eingerichtet, abhängig von dem Wert für die Eigenschaft der Zutatenportion einen Wert für einen Brühparameter zu bestimmen. Bei dem Brühparameter kann es sich beispielsweise um die Brühtemperatur, die Brühzeit und/oder die Wassermenge handeln.

Der bestimmte Brühparameter kann beispielsweise direkt für den folgenden Brühvorgang verwendet werden. Auf diese Weise wird der Brühparameter automatisch bestimmt und muss vom Nutzer nicht mehr eingegeben werden. Dies erhöht den Bedienkomfort und vermeidet Fehleingaben durch den Nutzer. Alternativ kann der bestimmte Brühparameter auch mit einem vom Nutzer vorgegebenen Brühparameter verglichen und bei Abweichungen über einen vorgegebenen Toleranzbereich hinaus eine entsprechende Warnmeldung über eine Nutzerschnittstelle des Teeautomaten an den Nutzer ausgeben werden

Die Steuereinrichtung kann insbesondere dazu eingerichtet sein, den Wert für einen Brühparameter durch Vergleich des bestimmten Wertes für die Eigenschaft der Zutatenportion mit vorgegebenen Referenzwerten zu bestimmen. Beispielsweise kann die Steuereinrichtung aus einer Menge vorgegebener Referenzwerte den Referenzwert bestimmen, der mit dem Wert für die Eigenschaft der Zutatenportion am besten übereinstimmt, und dann einen dem ausgewählten Referenzwert zugeordneten Brühparameterwert auswählen.

Bei einer weiteren Ausführungsform ist die Sensoreinrichtung dazu eingerichtet zu erfassen, ob sich eine Zutatenportion im Teeautomaten befinden, und die Steuereinrichtung ist dazu eingerichtet, die Durchführung eines Brühvorgangs zu blockieren, wenn die Sensoreinrichtung erfasst, dass sich keine Zutatenportion im Teeautomaten befinden. Beispielsweise kann mittels einer oberhalb der Brühkammer bzw. oberhalb eines in die Brühkammer eingesetzten Siebeinsatzes positionierten Kamera bestimmt werden, ob sich eine Zutatenportion im Teeautomaten befinden. Auf diese Weise wird verhindert, dass der Nutzer versehentlich den Start eines Brühvorgangs initiiert, ohne dass sich eine Zutatenportion im Teeautomaten befindet.

Bei einer weiteren Ausführungsform ist die Sensoreinrichtung dazu eingerichtet, während eines Brühvorgangs in der Brühkammer im Wasser schwebende Bestandteile einer Zutatenportion, insbesondere Teeblätter, zu erfassen und einen Wert einer Eigenschaft der Bestandteile der Zutatenportion zu bestimmen. Auf diese Weise können die Zutatenportion bzw. deren Bestandteile auch während des laufenden Brühvorgangs erfasst werden, so dass zum Beispiel eine Steuerung des laufenden Brühvorgangs abhängig von der Zutatenportion möglich ist.

Die Sensoreinrichtung kann zu diesem Zweck beispielsweise eine Kamera aufweisen, vorzugsweise eine 3D-Kamera, die Bilddaten von den im Wasser schwebenden Bestandteilen der Zutatenportion aufnimmt. Die besagte Kamera der Sensoreinrichtung kann beispielsweise oberhalb oder seitlich an der Brühkammer angeordnet sein.

Insbesondere kann die Sensoreinrichtung dazu eingerichtet sein, einen Wert für die Anzahl der Bestandteile der Zutatenportion pro Volumeneinheit, für deren Größe und/oder für die Größenverteilung der Bestandteile der Zutatenportion, insbesondere die Größenverteilung der Teeblätter, zu bestimmen. Aus diesen Werten lässt sich beispielsweise auch die Menge der Zutatenportion ermitteln.

Indem eine Eigenschaft der Bestandteile der Zutatenportion, insbesondere der Teeblätter, erfasst wird, während sie im Wasser schweben, kann die Zutatenportion noch genauer untersucht werden, insbesondere in Einzelblattauflösung. Dies ermöglicht, die Eigenschaften der Zutatenportion noch genauer zu erfassen und dadurch die Brühparameter für den laufenden Brühvorgang noch feiner einzustellen. Weiterhin kann insbesondere durch die Bestimmung der Anzahl der Bestandteile, insbesondere der Teeblätter, pro Volumeneinheit abgeleitet werden, wie die Bestandteile im Wasser verteilt sind. Sind die Teeblätter im Wasser in der Brühkammer beispielsweise sehr ungleichmäßig verteilt, führt dies zu einem schlechteren Brühergebnis. Um dies zu vermeiden, kann die Steuereinrichtung beispielsweise eine Bewegung eines Siebeinsatzes veranlassen, wenn eine ungleichmäßige Verteilung der Bestandteile der Zutatenportion festgestellt wird.

Bei einer entsprechenden Ausführungsform des Verfahrens werden während der Durchführung eines Brühvorgang die im Wasser schwebenden Bestandteile der Zutatenportion erfasst, ein Wert für deren Anzahl pro Volumeneinheit, ein Wert für deren Größe und/oder ein Wert für deren Größenverteilung bestimmt und der laufende Brühvorgang abhängig von dem bestimmten Wert bzw. den bestimmten Werten gesteuert.

Bei einer weiteren Ausführungsform ist die Steuereinrichtung dazu eingerichtet, den laufenden Brühvorgang abhängig von dem Wert für die Eigenschaft der im Wasser schwebenden Bestandteile der Zutatenportion zu steuern. Auf diese Weise kann der laufende Brühvorgang noch feiner an die Beschaffenheit der Zutatenportion angepasst werden.

Bei einer weiteren Ausführungsform ist die Steuereinrichtung dazu eingerichtet, den Teeautomaten entsprechend des zuvor beschriebenen Verfahrens bzw. einer Ausführungsform davon zu steuern. Zu diesem Zweck weist die Steuereinrichtung vorzugsweise einen Mikroprozessor und einen damit verbundenen digitalen Speicher auf, auf dem Befehle gespeichert sind, deren Ausführungen auf den Mikroprozessor die Steuerung des Teeautomaten entsprechend dem Verfahren bewirkt.

Im Folgenden werden weitere Ausführungsformen 1 bis 10 des Teeautomaten und Ausführungsformen 11 und 12 des Verfahrens beschrieben. Diese können untereinander und mit den zuvor beschriebenen Ausführungsformen kombiniert werden:
1. Teeautomat, eingerichtet zur automatischen Zubereitung von Teegetränken in einer Brühkammer, dadurch gekennzeichnet, dass der Teeautomat eine Sensoreinrichtung aufweist, die dazu eingerichtet ist, eine in den Teeautomaten eingefüllte Zutatenportion, insbesondere eine Portion Teeblätter, zu erfassen und einen Wert für eine Eigenschaft der Zutatenportion zu bestimmen, und dass der Teeautomat eine Steuereinrichtung zur Steuerung des Teeautomaten aufweist, die dazu eingerichtet ist, den Teeautomaten abhängig von dem Wert für die Eigenschaft der Zutatenportion zu steuern.
2. Teeautomat nach Ausführungsform 1, dadurch gekennzeichnet, dass die Sensoreinrichtung zur Erfassung der Zutatenportion einen optischen Sensor, insbesondere eine Kamera zur Aufnahme von Bilddaten, aufweist.
3. Teeautomat nach Ausführungsform 1 oder 2, dass die Sensoreinrichtung dazu eingerichtet ist, einen Wert für die Farbe, die Körnung, die Schüttdichte und/oder das Volumen der in den Teeautomaten eingefüllten Zutatenportion zu bestimmen.
4. Teeautomat nach einer der Ausführungsformen 1 bis 3, dadurch gekennzeichnet, dass die Sensoreinrichtung dazu eingerichtet ist, eine sich in der Brühkammer oder in einem in die Brühkammer eingesetzten Siebeinsatz befindliche Zutatenportion zu erfassen.
5. Teeautomat nach einer der Ausführungsformen 1 bis 4, dadurch gekennzeichnet, dass die Steuereinrichtung dazu eingerichtet ist, abhängig von dem Wert für die Eigenschaft der Zutatenportion einen Wert für einen Brühparameter zu bestimmen.
6. Teeautomat nach einer der Ausführungsformen 1 bis 5, dadurch gekennzeichnet, dass die Sensoreinrichtung dazu eingerichtet ist, zu erfassen, ob sich eine Zutatenportion im Teeautomaten befindet, und die Steuereinrichtung dazu eingerichtet ist, die Durchführung eines Brühvorgangs zu blockieren, wenn die Sensoreinrichtung erfasst, dass sich keine Zutatenportion im Teeautomaten befindet.
7. Teeautomat nach einer der Ausführungsformen 1 bis 6, dadurch gekennzeichnet, dass die Sensoreinrichtung dazu eingerichtet ist, während eines Brühvorgangs in der Brühkammer im Wasser schwebende Bestandteile der Zutatenportion, insbesondere Teeblätter, zu erfassen und einen Wert einer Eigenschaft der Bestandteile zu bestimmen.
8. Teeautomat nach Ausführungsform 7, dadurch gekennzeichnet, dass die Sensoreinrichtung dazu eingerichtet ist, einen Wert für die Anzahl der Bestandteile, insbesondere der Teeblätter, pro Volumeneinheit, für deren Größe und/oder die Größenverteilung der Bestandteile zu bestimmen.
9. Teeautomat nach Ausführungsform 7 oder 8, dadurch gekennzeichnet, dass die Steuereinrichtung dazu eingerichtet ist, den laufenden Brühvorgang abhängig von dem Wert für die Eigenschaft der im Wasser schwebenden Bestandteile der Zutatenportion zu steuern.
10. Teeautomat nach einer der Ausführungsformen 1 bis 9, dadurch gekennzeichnet, dass die Steuereinrichtung dazu eingerichtet ist, den Teeautomaten entsprechend einem Verfahren nach Ausführungsform 11 oder 12 zu steuern.
11. Verfahren zur Steuerung eines Teeautomaten, insbesondere eines Teeautomaten nach einer der Ausführungsformen 1 bis 10, bei dem eine in den Teeautomaten eingefüllte Zutatenportion, insbesondere eine Portion Teeblätter, optisch erfasst wird und ein Wert für eine Eigenschaft der Zutatenportion, insbesondere für deren Farbe, Körnung, Schüttdichte und/oder Volumen, bestimmt wird, und bei dem ein Brühvorgang mit der Zutatenportion abhängig von dem bestimmten Wert für die Eigenschaft der Zutatenportion gesteuert wird.
12. Verfahren nach Ausführungsform 11, dadurch gekennzeichnet, dass während der Durchführung eines Brühvorgangs die im Wasser schwebenden Bestandteile der Zutatenportion erfasst, ein Wert für deren Anzahl pro Volumeneinheit, deren Größe und/oder deren Größenverteilung bestimmt wird und der laufende Brühvorgang abhängig von dem bestimmten Wert gesteuert wird.

Weitere Merkmale und Vorteile der vorliegenden Erfindung ergeben sich aus der nachfolgenden Beschreibung mehrerer Ausführungsbeispiele, wobei auf die beigefügte Zeichnung Bezug genommen wird.

In der Zeichnung zeigen
- Fig. 1a-c: ein Ausführungsbeispiel des Teeautomaten,
- Fig. 2: ein Flussdiagramm eines Ausführungsbeispiels des Verfahrens,
- Fig. 3: ein Diagramm zur Erläuterung des Verfahrens aus Fig. 2,
- Fig. 4: ein Flussdiagramm eines weiteren Ausführungsbeispiel des Verfahrens und
- Fig. 5: ein Flussdiagramm eines weiteren Ausführungsbeispiels des Verfahrens.

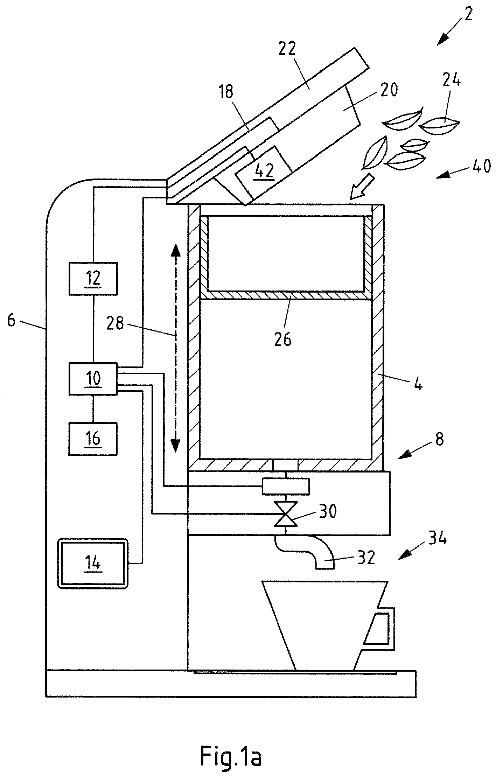

Die Figuren 1a-c zeigen ein Ausführungsbeispiel eines Teeautomaten. Der Teeautomat 2 ist zur automatischen Zubereitung von Teegetränken in einer Brühkammer 4 eingerichtet. Zu diesem Zweck weist der Teeautomat ein Gehäuse 6 mit einer Brühkammeraufnahme 8 auf, in die die Brühkammer 4 einsetzbar ist. Der Teeautomat 2 weist also eine entnehmbare Brühkammer 4 auf. Stattdessen könnte die Brühkammer auch integral mit dem Gehäuse 6 ausgebildet sein.

In dem Gehäuse 6 sind weitere Komponenten angeordnet, die für die automatische Zubereitung von Teegetränken erforderlich sind. So weist der Teeautomat eine Steuereinrichtung 10, eine Heißwasserversorgung 12 und eine Nutzerschnittstelle 14 in Form eines Touchscreens auf.

Die Steuereinrichtung 10 ist zur Steuerung des Teeautomaten eingerichtet. Zu diesem Zweck ist auf einem mit der Steuereinrichtung 10 verbundenen Speicher 16 ein Programm mit Befehlen gespeichert, deren Ausführung auf einem Mikroprozessor der Steuereinrichtung 10 eine Steuerung der einzelnen Komponenten des Teeautomaten 2 bewirkt. Beispielsweise kann die Steuereinrichtung 10 zur automatischen Zubereitung eines Teegetränks die Heißwasserversorgung 12 ansteuern, so dass diese zur Durchführung eines Brühvorgangs über eine entsprechende Zuleitung 18 heißes Wasser durch einen Verteilerkopf 20 in die Brühkammer 4 leitet.

Weiterhin kann die Steuereinrichtung 10 über die Nutzerschnittstelle 14 die Ausgabe von Nutzerinformationen bewirken, beispielsweise dass ein Brühvorgang abgeschlossen ist, oder Nutzereingaben empfangen, beispielsweise einen Nutzerbefehl zur Durchführung eines Brühvorgangs.

Um mit dem Teeautomaten 2 ein Teegetränkes zuzubereiten, kann ein Nutzer den als schwenkbaren Deckel 22 ausgebildeten oberen Teil des Gehäuses 6 wie in Figur 1a gezeigt nach oben klappen, so dass die Brühkammer 4 von oben zugänglich ist. Der Nutzer kann dann eine Zutatenportion, insbesondere eine Portion loser Teeblätter 24, in einen Siebeinsatz 26 geben, der in die Brühkammer 4 eingesetzt wird. Anschließend wird der Deckel 22 wieder geschlossen und der Nutzer kann durch eine entsprechende Eingabe über die Nutzerschnittstelle 14 einen Brühvorgang starten.

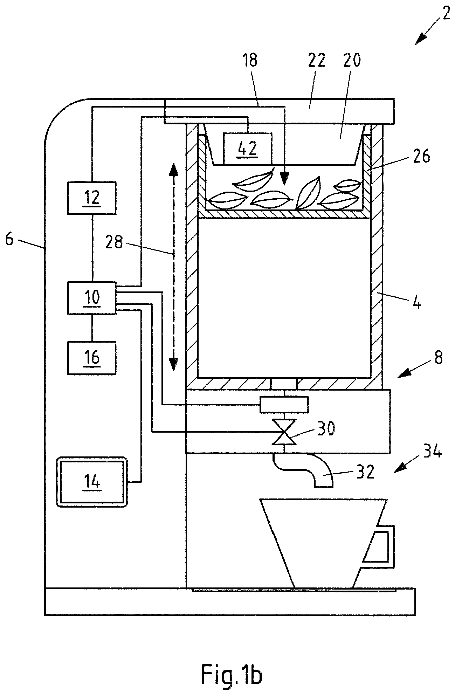

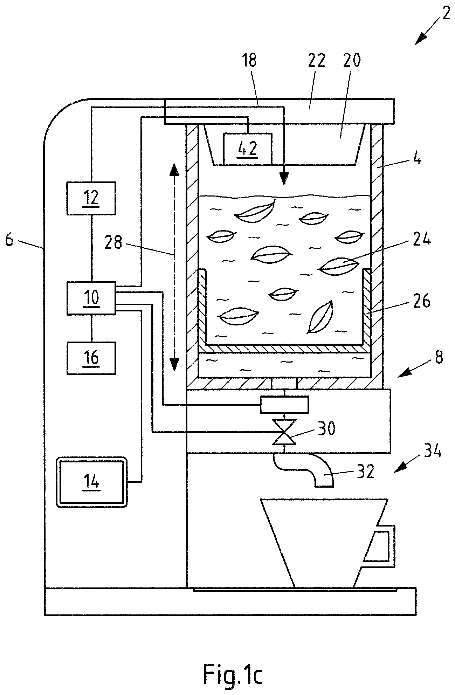

Auf den Befehl des Nutzers steuert die Steuereinrichtung 10 dann die Heißwasserversorgung 12 an, so dass eine vorgegebene Menge Wasser mit einer vorgegebenen Temperatur in die Brühkammer 4 eingeleitet wird (vgl. Fig. 1b). Weiterhin wird der Siebeinsatz 26 durch eine von der Steuereinrichtung 10 angesteuerte, beispielsweise magnetisch mit dem Siebeinsatz 26 gekoppelte Verfahreinrichtung 28 in die Brühkammer hinabgefahren, so dass die Teeblätter 24 dort mit dem eingeleiteten heißen Wasser in Kontakt kommen (vgl. Fig. 1c).

Nach Ablauf einer vorgegebenen Brühdauer steuert die Steuereinrichtung 10 die Verfahreinrichtung 28 an, so dass diese den Siebeinsatz 26 und damit die Teeblätter 24 wieder aus dem Wasser in der Brühkammer 4 heraushebt. Das fertige Teegetränk kann dann auf eine Nutzeranforderung, beispielsweise über die Nutzerschnittstelle 14, oder automatisch mittels eines steuerbaren Ventils 30 durch einen Auslass 32 in eine unterhalb der Brühkammer 4 angeordnete Aufnahme 34 für das fertige Teegetränk, beispielsweise eine Tasse oder eine Kanne, abgefüllt werden.

Bei herkömmlichen Teemaschinen wählt der Nutzer die Brühparameter für einen Brühvorgang, insbesondere die Brühtemperatur und die Brühzeit, manuell über die Nutzerschnittstelle 14 aus. Dies ist aufwändig für den Nutzer und es kann zu Fehleinstellungen der Brühparameter durch den Nutzer kommen.

Zur besseren Bedienbarkeit und zur Verbesserung der Qualität des hergestellten Teegetränks weist der Teeautomat 2 eine Sensoreinrichtung 40 mit einer Kamera 42 als optischen Sensor auf. Die Kamera 42 ist dazu eingerichtet, Bilddaten von einer im Siebeinsatz 26 angeordneten Zutatenportion 24 zu erfassen. Diese Bilddaten werden von der Kamera 42 an die Steuereinrichtung 10 übermittelt und dort mittels bildverarbeitungstechnischer Methoden analysiert. Insbesondere stellt die Steuereinrichtung durch eine Bildanalyse der Bilddaten fest, ob sich in dem Siebeinsatz 26 überhaupt eine Zutatenportion befindet. Weiterhin analysiert die Steuereinrichtung 10 anhand der Bilddaten die Farbe, die Körnung (d.h. die Größe der Bestandteile der Zutatenportion), die Schüttdichte und/oder das Volumen der in dem Teesiebeinsatz 26 als Zutatenportion 24 befindlichen Menge an Teeblättern.

Aus der ermittelten Farbe und ggf. Körnung der Zutatenportion bestimmt die Steuereinrichtung 10 sodann die Teesorte, indem sie die ermittelte Farbe und ggf. die Körnung mit im Speicher 16 hinterlegten Referenzwerten vergleicht. Aus einer schwarzen Farbe kann zum Beispiel auf schwarzen Tee und aus einer grünen Farbe auf grünen Tee geschlossen werden. Weiterhin können verschiedene Grünteesorten durch ihre charakteristische Körnung voneinander unterschieden werden. Weiterhin bestimmt die Steuereinrichtung 10 aus dem ermittelten Volumen und ggf. der Schüttdichte einen Wert für die Menge der Zutatenportion.

Die Steuereinrichtung 10 ist weiterhin dazu eingerichtet, mit den für die Teesorte und die Menge der Zutatenportion 24 bestimmten Werten den Teeautomaten 2 zu steuern. Beispielsweise kann die Steuereinrichtung 10 aus einer im Speicher 16 hinterlegten Datenbank Brühparameter abrufen, die der bestimmten Teesorte zugeordnet sind, und den nächsten Brühvorgang mit diesen Brühparametern steuern. Abhängig von der bestimmten Menge der Zutatenportion 24 kann die Steuereinrichtung 10 zudem die Wassermenge bemessen, die beim nächsten Brühvorgang in die Brühkammer 4 eingeleitet wird.

Auf diese Weise wählt der Teeautomat 2 Brühparameter automatisch abhängig von der eingefüllten Zutatenportion 24 aus, so dass die Bedienung des Teeautomaten 2 vereinfacht wird.

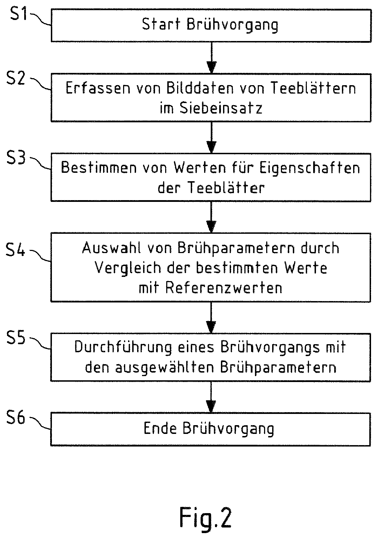

Der Betrieb des Teeautomaten 2 wird nachfolgend weiter anhand der Fig. 2 beschrieben, die auch ein erstes Ausführungsbeispiel des erfindungsgemäßen Verfahrens zur Steuerung eines Teeautomaten zeigt. Insbesondere kann die Steuereinrichtung 10 dazu eingerichtet sein, den zuvor beschriebenen Teeautomaten 2 entsprechend des in Figur 2 dargestellten Verfahrens zu steuern.

Im ersten Schritt S1 wird ein Brühvorgang initiiert. Dies kann beispielsweise dadurch erfolgen, dass die Steuereinrichtung 10 über die Nutzerschnittstelle 14 eine entsprechende Eingabe eines Nutzers empfängt. Alternativ kann mit dem Schritt S1 auch automatisch begonnen werden, wenn der Nutzer den Deckel 22 in die in Figur 1b dargestellte geschlossene Position bringt.

Im Schritt S2 erfasst die Kamera 42 der Sensoreinrichtung 40 Bilddaten von der im Siebeinsatz 26 befindlichen Zutatenportion 24.

Diese Bilddaten werden im Schritt S3 von der Steuereinrichtung 10 mit bildverarbeitungstechnischen Methoden analysiert, um das von der Zutatenportion 24 eingenommene Volumen und deren Schüttdichte zu bestimmen. Aus dem Volumen und der Schüttdichte wird sodann ein Wert für die Menge der Zutatenportion 24 abgeschätzt. Weiterhin leitet die Steuereinrichtung 10 aus den Bilddaten Werte für die Farbe und ggf. die Körnung der Zutatenportion 24 sowie ggf. für die Form der Bestandteile der Zutatenportion ab.

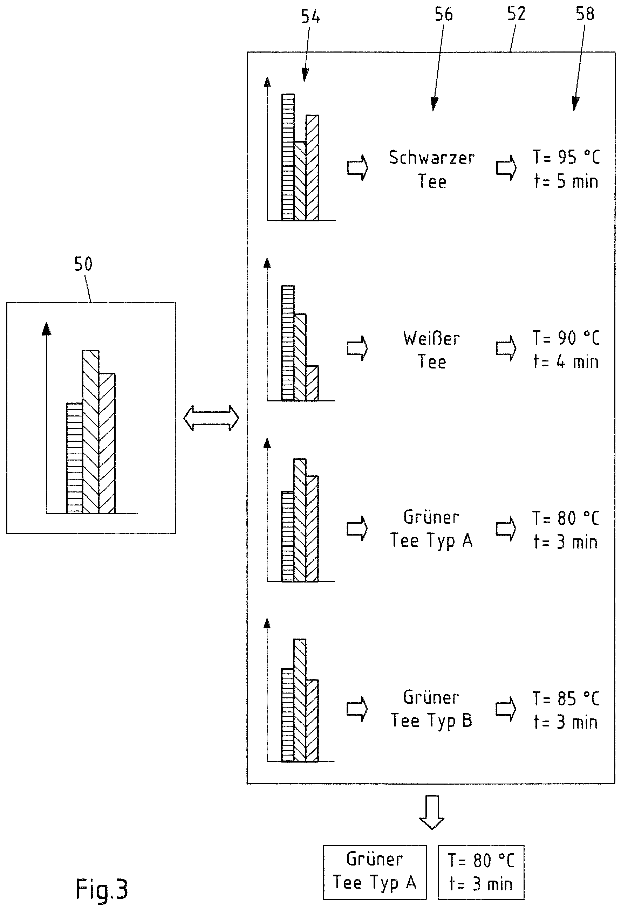

Abhängig von den im Schritt S3 bestimmten Werten wählt die Steuereinrichtung im Schritt S4 dann geeignete Brühparameter für die Zutatenportion 24 aus, indem sie die aus den Bilddaten bestimmten Werte für die Eigenschaft der Zutatenportion 24 mit Referenzwerten vergleicht, die in einer Datenbank in Speicher 16 gespeichert sind. Dieser Vorgang wird im Folgenden anhand der Figur 3 erläutert.

Figur 3 zeigt ein Diagramm zur Darstellung des Auswahlprozesses der Brühparameter auf Grundlage der an den Bilddaten bestimmten Werte. Als Eingabe für diesen Schritt S4 liegen die von der Steuereinrichtung 10 bestimmten Werte für die Eigenschaften der Zutatenportion 24 vor. Diese sind in Figur 3 schematisch als Säulendiagramm 50 dargestellt, wobei die drei unterschiedlich schraffierten Säulen exemplarisch die für drei Eigenschaften bestimmten Werte repräsentieren. Beispielsweise kann die linke Säule für einen nummerischen Wert stehen, der die Farbe der Zutatenportion repräsentiert, beispielsweise den gemessenen relativen Grünanteil. Die mittlere Säule kann beispielsweise für einen numerischen Wert für die Körnung und die rechte Säule kann für einen numerischen Wert für die Form der einzelnen Teeblätter, zum Beispiel das Längen-zu-Breiten-Verhältnis, stehen.

Dieser Satz von Werten wird von der Steuereinrichtung 10 mit einer im Speicher 16 gespeicherten Datenbank 52 von Referenzwerten verglichen. Die Referenzwerte 54 sind in Figur 3 ebenfalls schematisch als Säulendiagramme dargestellt. Jedem dieser Referenzwerte sind in der Datenbank 52 jeweils ein Wert für die Teesorte 56 sowie zugehörige Brühparameter 58 zugeordnet.

Die Steuereinrichtung ermittelt durch eine vorgegebene Funktion denjenigen Satz von Referenzwerten, der am besten mit den bestimmten Werten 50 übereinstimmt. Die diesem Satz zugeordnete Werte für die Teesorte 56 und die Brühparameter 58 werden dann für den weiteren Brühvorgang S4 ausgewählt und eingestellt. In dem Beispiel in Figur 3 stimmen die Werte 50 am besten mit dem Datenbankeintrag "grüner Tee Typ A" überein, so dass entsprechend die Teesorte "grüner Tee Typ A" und die zugehörigen Brühparameter (Brühtemperatur T = 80 °C und Brühzeit t = 3 min.) aus der Datenbank 52 ausgelesen werden.

Wie die Figur 3 zeigt, können auf diese Weise nicht nur verschiedene Teesorten (schwarzer Tee, weißer Tee, grüner Tee) unterschieden werden, sondern auch verschiedene Unterarten der Teesorten, beispielsweise feinere oder gröbere Mahlungen von grünem Tee (hier durch Typ A und Typ B bezeichnet).

In Fig. 2 werden die in Schritt S4 ausgewählten Brühparameter sodann im zur Durchführung eines Brühvorgangs in Schritt S5 verwendet, d.h. die Steuereinrichtung 10 veranlasst die Durchführung des Brühvorgangs mit der ausgewählten Brühtemperatur (T = 80 °C) und für die ausgewählte Brühzeit (t = 3 min.).

Nach Ablauf der Brühzeit endet der Brühvorgang in Schritt S6 und das zubereitete Teegetränk wird automatisch oder auf Nutzeranforderung über die Nutzerschnittstelle 14 aus dem Auslass 32 in eine Teeaufnahme 34 ausgelassen.

Bei dem in Figur 2 dargestellten Verfahren veranlasst die Steuereinrichtung 10 die automatische Durchführung des Brühvorgangs mit den zuvor anhand der Bilddaten ausgewählten Brühparametern. Auf diese Weise können die Brühparameter für die in den Teeautomaten 2 eingefüllte Zutatenportion 24 automatisch eingestellt werden, so dass sich einerseits die Bedienung erleichtert und mögliche Fehleingaben durch den Nutzer vermieden werden.

Alternativ kann die Steuereinrichtung 10 auch einen Vergleich der in Schritt S4 ausgewählten Brühparameter mit zum Beispiel durch den Nutzer vorgegebenen Brühparametern vornehmen und bei Abweichungen über einem vorgegebenen Toleranzbereich hinaus die Ausgabe einer entsprechenden Warnmeldung über die Nutzerschnittstelle 14 bewirken oder die Durchführung eines Brühvorgangs blockieren. Auf diese Weise wird eine automatisch Kontrolle der vom Nutzer vorgegebenen Brühparameter erreicht, so dass Fehleingaben vermieden werden können.

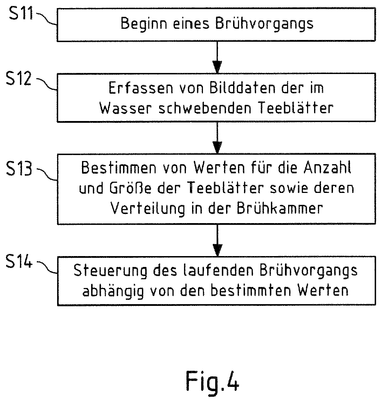

Figur 4 zeigt ein weiteres Ausführungsbeispiel des erfindungsgemäßen Verfahrens. Im Schritt S11 wird von der Steuereinrichtung 10 ein Brühvorgang initiiert, beispielsweise auf eine Nutzeranforderung über die Nutzerschnittstelle 14. Die Steuereinrichtung 10 bewirkt sodann, dass die Heißwasserversorgung 12 eine vorgegebene Menge Wasser mit einer vorgegebenen Temperatur über den Verteilerkopf 20 in die Brühkammer 4 einleitet und die Verfahreinrichtung 28 den Siebeinsatz 26 mit der Zutatenportion 24 in die Brühkammer 4 absenkt. Die Bestandteile der Zutatenportion, vorliegend also die Teeblätter, verteilen sich dann in dem in der Brühkammer 4 befindlichen Wasser, wie es in Figur 1c dargestellt ist.

Über die Kamera 42 werden dann im Schritt S12 während des laufenden Brühverfahrens Bilddaten von den im Wasser schwebenden Teeblättern 24 erfasst. Zur dreidimensionalen Erfassung der Teeblätter 24 kann auch eine 3D-Kamera vorgesehen sein. Weiterhin kann zusätzlich zur Kamera 42 eine weitere Kamera (nicht dargestellt) an der Seite der Brühkammer 4 vorgesehen sein, um die Teeblätter aus verschiedenen Perspektiven zu erfassen.

Die von der Kamera 42 erfassten Bilddaten werden von der Steuereinrichtung 10 im Schritt S13 durch bildverarbeitungstechnische Maßnahmen analysiert, um daraus Werte für die Anzahl und die Größe der Teeblätter 24 sowie deren Verteilung in der Brühkammer 4 zu bestimmen.

Die Steuereinrichtung 10 steuert dann in Schritt S14 den laufenden Brühvorgang abhängig von diesen bestimmten Werten. Beispielsweise kann die Steuereinrichtung aus der bestimmten Anzahl und Größe der Teeblätter und deren Größenverteilung die Brühzeit bestimmen und den Brühvorgang nach Ablauf dieser Brühzeit beenden, indem der Siebeinsatz 26 aus dem Wasser herausgefahren wird. Auf diese Weise wird die Brühdauer erst während des laufenden Brühvorgangs bestimmt. Dies hat den Vorteil, dass sich die Menge der Teeblätter 24 im genauer bestimmen lässt, wenn diese in der Flüssigkeit schweben, so dass die Brühparameter genauer an die tatsächliche Teemenge angepasst werden können.

Die Steuereinrichtung 10 kann den Brühvorgang auch abhängig von der Verteilung der Teeblätter 24 in der Brühkammer 4 steuern. Stellt die Steuereinrichtung beispielsweise anhand der Bilddaten fest, dass die Teeblätter sehr ungleichmäßig in der Brühkammer verteilt sind, beispielsweise auf dem Boden des Siebeinsatzes 26 abgesunken oder an die Wasseroberfläche aufgestiegen sind, so kann die Steuereinrichtung eine Bewegung des Siebeinsatzes 26 über die Verfahreinrichtung 28 veranlassen, so dass die Teeblätter 24 in der Brühkammer 4 besser verteilt werden. Auf diese Weise wird der Brühvorgang verbessert.

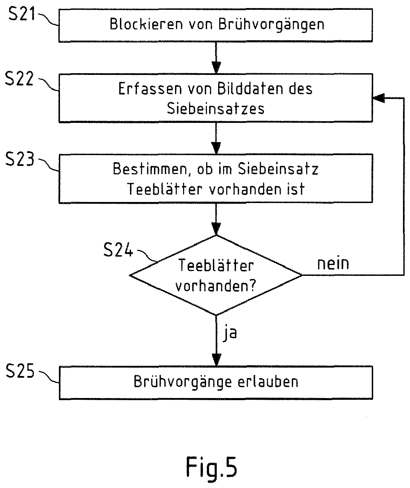

Figur 5 zeigt ein weiteres Ausführungsbeispiel des Verfahrens. Das Verfahren beginnt in Schritt S21 vor dem Beginn eines Brühvorgangs. In diesem Schritt blockiert die Steuereinrichtung 10 zunächst die Durchführung von Brühvorgängen, beispielsweise indem ein Kennwert über die Zulässigkeit eines Brühvorgangs auf "FALSCH" gesetzt wird. Im nächsten Schritt S22 werden von der Kamera 42 Bilddaten von einer etwaigen Zutatenportion 24 im Siebeinsatz 26 aufgenommen und an die Steuereinrichtung 10 weitergeleitet. Das Erfassen der Bilddaten kann beispielsweise automatisch erfolgen, wenn der Deckel 22 von der in Figur 1a gezeigten Position in die in Figur 1b gezeigte Position geklappt wird. Alternativ kann das Erfassen der Bilddaten auch nach Empfang einer bestimmten Nutzereingabe über die Nutzerschnittstelle 14 erfolgen, beispielsweise wenn der Nutzer die Durchführung eines Brühvorgangs anfordert.

Im Schritt S23 bestimmt die Steuereinrichtung 10 durch eine Analyse der gewonnenen Bilddaten mittels bildverarbeitungstechnischer Methoden, ob eine Zutatenportion 24 im Siebeinsatz 26 vorhanden ist. Ist dies nicht der Fall, so erfolgt im Schritt S24 ein Rücksprung zum Schritt S22, wobei die Durchführung von Brühvorgängen weiterhin blockiert bleibt. Auf diese Weise wird unterbunden, dass ein Brühvorgang durchgeführt wird, obwohl sich keine Zutatenportion 24 im Siebeinsatz 26 befindet. Alternativ oder zusätzlich kann die Steuereinrichtung 10 auch eine Warnmeldung auf der Nutzerschnittstelle 14 ausgeben.

Stellt die Steuereinrichtung 10 im Schritt S23 hingegen fest, dass sich eine Zutatenportion 24 im Siebeinsatz 26 befindet, so lässt die Steuereinrichtung 10 im Schritt S25 die Durchführung eines Brühvorgangs zu, beispielsweise indem sie einen Kennwert über die Zulässigkeit eines Brühvorgangs auf "WAHR" setzt.

Auf diese Weise wird erreicht, dass kein Brühvorgang gestartet werden kann, ohne dass sich eine Zutatenportion im Siebeinsatz 26 befindet. Eine Fehlbedienung des Teeautomaten 2 wird dadurch vermieden.

## Patentansprüche

1. Teeautomat (2), eingerichtet zur automatischen Zubereitung von Teegetränken in einer Brühkammer (4),
**dadurch gekennzeichnet,**
- **dass** der Teeautomat (2) eine Sensoreinrichtung (40) aufweist, die dazu eingerichtet ist, eine in den Teeautomaten (2) eingefüllte Zutatenportion (24), insbesondere eine Portion Teeblätter, zu erfassen und einen Wert für eine Eigenschaft der Zutatenportion (24) zu bestimmen, und zwar einen Wert für die Farbe, die Körnung und/oder die Schüttdichte der in den Teeautomaten (2) eingefüllten Zutatenportion (24), und
- **dass** der Teeautomat (2) eine Steuereinrichtung (10) zur Steuerung des Teeautomaten (2) aufweist, die dazu eingerichtet ist, den Teeautomaten (2) abhängig von dem Wert für die Eigenschaft der Zutatenportion (24) zu steuern.

2. Teeautomat nach Anspruch 1,
**dadurch gekennzeichnet, dass** die Sensoreinrichtung (40) zur Erfassung der Zutatenportion (24) einen optischen Sensor, insbesondere eine Kamera (42) zur Aufnahme von Bilddaten, aufweist.

3. Teeautomat nach Anspruch 1 oder 2,
**dadurch gekennzeichnet, dass** die Sensoreinrichtung (40) dazu eingerichtet ist, eine sich in der Brühkammer (4) oder in einem in die Brühkammer (4) eingesetzten Siebeinsatz (26) befindliche Zutatenportion (24) zu erfassen.

4. Teeautomat nach einem der Ansprüche 1 bis 3,
**dadurch gekennzeichnet, dass** die Steuereinrichtung (10) dazu eingerichtet ist,
abhängig von dem Wert für die Eigenschaft der Zutatenportion (24) einen Wert für einen Brühparameter zu bestimmen.

5. Teeautomat nach einem der Ansprüche 1 bis 4,
**dadurch gekennzeichnet, dass** die Sensoreinrichtung (40) dazu eingerichtet ist, zu erfassen, ob sich eine Zutatenportion (24) im Teeautomaten (2) befindet, und die Steuereinrichtung (10) dazu eingerichtet ist, die Durchführung eines Brühvorgangs zu blockieren, wenn die Sensoreinrichtung (40) erfasst, dass sich keine Zutatenportion (24) im Teeautomaten (2) befindet.

6. Teeautomat nach einem der Ansprüche 1 bis 5,
**dadurch gekennzeichnet, dass** die Sensoreinrichtung (40) dazu eingerichtet ist, während eines Brühvorgangs in der Brühkammer (4) im Wasser schwebende Bestandteile der Zutatenportion (24), insbesondere Teeblätter, zu erfassen und einen Wert einer Eigenschaft der Bestandteile zu bestimmen.

7. Teeautomat nach Anspruch 6,
**dadurch gekennzeichnet, dass** die Sensoreinrichtung (40) dazu eingerichtet ist, einen Wert für die Anzahl der Bestandteile, insbesondere der Teeblätter, pro Volumeneinheit, für deren Größe und/oder die Größenverteilung der Bestandteile zu bestimmen.

8. Teeautomat nach Anspruch 6 oder 7,
**dadurch gekennzeichnet, dass** die Steuereinrichtung (10) dazu eingerichtet ist, den laufenden Brühvorgang abhängig von dem Wert für die Eigenschaft der im Wasser schwebenden Bestandteile der Zutatenportion (24) zu steuern.

9. Teeautomat nach einem der Ansprüche 1 bis 8,
**dadurch gekennzeichnet, dass** die Steuereinrichtung (10) dazu eingerichtet ist, den Teeautomaten (2) entsprechend einem Verfahren nach Anspruch 10 oder 11 zu steuern.

10. Verfahren zur Steuerung eines Teeautomaten (2), insbesondere eines Teeautomaten nach einem der Ansprüche 1 bis 9,
- bei dem eine in den Teeautomaten (2) eingefüllte Zutatenportion (24), insbesondere eine Portion Teeblätter, optisch erfasst wird und ein Wert für eine Eigenschaft der Zutatenportion (24), und zwar für deren Farbe, Körnung und/oder Schüttdichte, bestimmt wird, und
- bei dem ein Brühvorgang mit der Zutatenportion (24) abhängig von dem bestimmten Wert für die Eigenschaft der Zutatenportion (24) gesteuert wird.

11. Verfahren nach Anspruch 10,
**dadurch gekennzeichnet, dass** während der Durchführung eines Brühvorgangs die im Wasser schwebenden Bestandteile der Zutatenportion (24) erfasst, ein Wert für deren Anzahl pro Volumeneinheit, deren Größe und/oder deren Größenverteilung bestimmt wird und der laufende Brühvorgang abhängig von dem bestimmten Wert gesteuert wird.
